# EUROPÄISCHE PATENTSCHRIFT

(11) **EP 1 500 529 B1**
(45) Veröffentlichungstag und Bekanntmachung des Hinweises auf die Patenterteilung: **14.11.2007**
(21) Anmeldenummer: 04015013.8
(22) Anmeldetag: 25.06.2004
(51) Int. Cl.: B60G 7/04, B60G 11/40, B60G 11/10

(54) **Gefederte Aufhängung einer Starrachse in einem Fahrzeug**
Rigid axle suspension in a vehicle
Suspension d'essieu rigide pour vehicules

(30) Priorität: 21.07.2003 AT 11402003
(43) Veröffentlichungstag der Anmeldung: 26.01.2005
(73) Patentinhaber: MAN Nutzfahrzeuge Österreich AG, 4400 Steyr (AT)
(72) Erfinder: Mekina, Markus, 4400 Steyr (AT); Keppel, Manfred, 7540 Urbersdorf (AT); Jaksch, Dieter, 4400 Steyr (AT)

(56) Entgegenhaltungen:
- EP-A- 1 088 687
- US-A- 2 942 870
- US-A1- 2003 025 288
- US-A1- 2003 038 445
- PATENT ABSTRACTS OF JAPAN Bd. 0041, Nr. 47 (M-036), 16. Oktober 1980 (1980-10-16) & JP 55 099405 A (SHIN MEIWA IND CO LTD), 29. Juli 1980 (1980-07-29)

## Beschreibung

Die Erfindung betrifft eine gefederte Aufhängung einer Starrachse in einem Kraftfahrzeug mit Merkmalen, wie im Oberbegriff des Anspruchs 1 angegeben.

Eine gefederte Achsaufhängung der gattungsgemäßen Art ist zum einen aus der JP 55-099405 bekannt. Daneben ist sie schon bei Bentley-Fahrzeugen der Baujahre bis 1934 benutzt worden, was an entsprechenden Oldtimer-Fahrzeugen ersichtlich ist. Als Anschlagpuffer kommt dabei eine quadratische, etwa zwei Zentimeter dicke Scheibe aus begrenzt elastischem Material zur Anwendung, die vermutlich in die Vertiefung der Konsole einvulkanisiert oder eingeklebt ist. Die tatsächliche Verbindungsart ist an besagten Oldtimern aber nicht feststellbar.

Es ist demgegenüber Aufgabe der Erfindung, für eine Starrachsaufhängung der gattungsgemäßen Art einen die Einfederung begrenzenden Anschlag zu schaffen, der billig herstellbar und auf einfachste Weise montierbar ist.

Diese Aufgabe wird erfindungsgemäß durch die im Kennzeichen des Anspruchs 1 angegebenen Merkmale gelöst.

Vorteilhafte Ausgestaltungen oder Details der erfindungsgemäßen Lösung sind in den Unteransprüchen gekennzeichnet.

Aufgrund der erfindungsgemäßen Form des Anschlagpuffers und der Konsole ist der Anschlagpuffer schnell und in einfachster Form an der Konsole befestigbar.

Nachstehend ist die erfindungsgemäße Lösung anhand eines in der Zeichnung dargestellten Ausführungsbeispiels noch näher erläutert.

In der Zeichnung zeigen:
- Fig. 1A: in Seitenansicht eine gefederte Achsaufhängung eines Fahrzeugs,
- Fig. 1B: die Achsaufhängung gemäß Fig. 1A in Vorderansicht,
- Fig. 2: einen Anschlagpuffer erfindungsgemäßer Art in Seitenansicht,
- Fig. 3: einen Querschnitt durch eine erfindungsgemäße Konsole,
- Fig. 4: eine Perspektivansicht der Konsole von Fig. 3 von schräg oben,
- Fig. 5: den Anschlagpuffer von Fig. 2 angebaut an der Konsole von Fig. 3, 4.

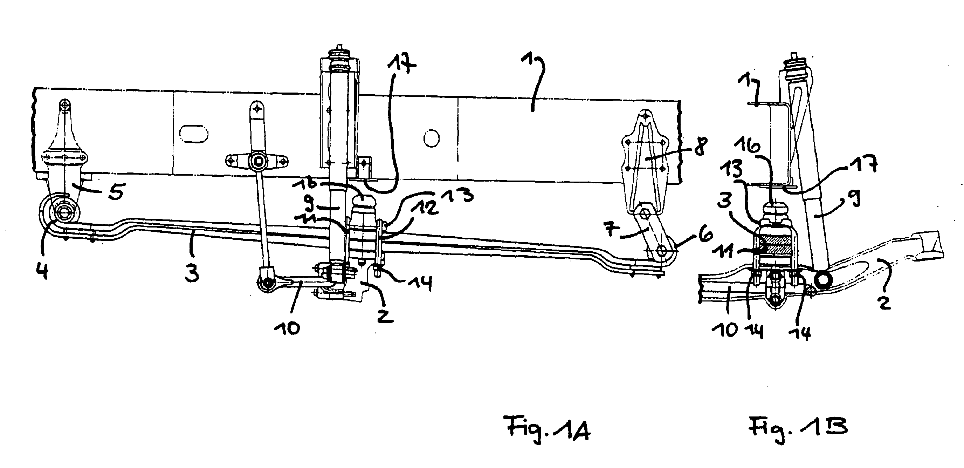

In der Zeichnung gemäß Fig. 1 ist von einem Fahrzeug ein Abschnitt eines ein Teil des Fahrgestells bildender Rahmen-Längsträgers 1 gezeigt, an dem eine Starrachse mit ihrem Achskörper 2 gefedert angelenkt und befestigt ist, und zwar mittels einer Blattfeder 3, die aus einem einzigen Federblatt oder einem Blattfederpaket bestehen kann. Die Blattfeder 3 ist einenendes mit ihrem Federauge 4 an einem rahmenfesten Lagerbock 5 befestigt und mit ihrem andernendes gegebenen Federauge 6 an einer Schwinge 7 und über diese fliegend an einem rahmenfesten Lagerbock 8 angelenkt. Mit 9 ist ein Stoßdämpfer und mit 10 ein Stabilisator bezeichnet, die beide einerseits am Achskörper 2 und andererseits am RahmenLängsträger 1 angelenkt sind.

Der Achskörper 2 der Starrachse ist unten an der Blattfeder 3 anliegend mittels zweier U-förmiger Haltebügel 11, 12 befestigt. Diese übergreifen eine oben auf der Blattfeder 3 aufliegende Konsole 13 und spannen diese dort mittels sich unten am Achskörper 2 abstützenden Muttern 14 fest. Die Konsole 13 weist oben eine Vertiefung 15 auf, in der ein Anschlagpuffer 16 aufgenommen ist, der bei Einfederung des Rahmens in Bezug auf die Starrachse im Zusammenwirken mit einem rahmenfesten Anschlag 17 den Einfederungsweg begrenzt. Außerdem ist in der Konsole 13 beiderseits ihrer Vertiefung 15 je eine Querrinne 18, 19 gegeben, in der je einer der beiden Haltebügel 11, 12 lagefixiert aufgenommen ist.

Erfindungsgemäß ist als Anschlagpuffer 16 ein solcher verwendet, der einen Pufferkörper 20 und unten an diesem einen pilzförmigen Befestigungszapfen 21 aufweist, dessen Hals mit 22 und Kopf 23 bezeichnet sind. Außerdem ist dieser Anschlagpuffer 16 erfindungsgemäß mit einem unteren Teilabschnitt 24 seines Pufferkörpers 20 in der entsprechend ausgebildeten oberen Vertiefung 15 der Konsole 13 eingetaucht aufgenommen. Des weiteren durchdringt dieser Anschlagpuffer 16 erfindungsgemäß mit dem Hals 22 seines pilzförmigen Befestigungszapfens 21 eine Durchgangsbohrung 25 in der Konsole 13 und taucht mit dem Kopf 23 seines Befestigungszapfens 21 in eine unten in der Konsole 13 gegebene Vertiefung 26 ein und ist dort an deren Boden 27, den Rand um die Durchgangsbohrung 25 hintergreifend, verrastet.

Nachstehend ist auf vorteilhafte Details und Ausgestaltungen der erfindungsgemäßen Lösung näher eingegangen.

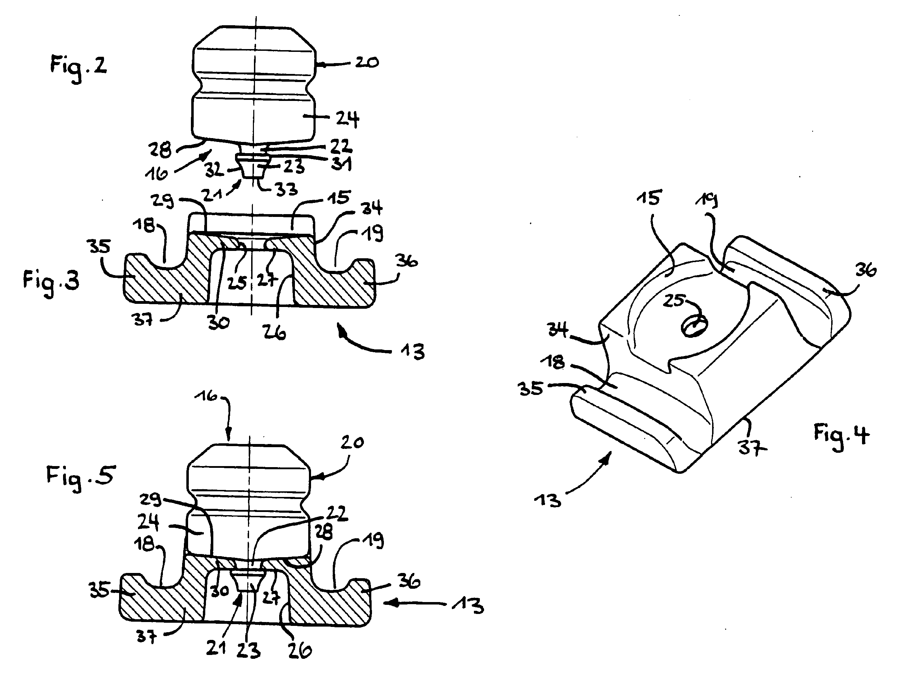

Wie aus den Figuren 2, 3 und 5 gut ersichtlich, kann die Unterseite 28 des Pufferkörpers 20 am Anschlagpuffer 16 schwach kegelförmig oder konvex gewölbt und der Boden 29 der oberen Vertiefung 15 in der Konsole 13 für eine formschlüssige Anlage dieser solchermaßen gestalteten Pufferkörper-Unterseite 28 entsprechend angepasst sein.

Der Anschlagpuffer 16 weist zumindest in jenem unteren Bereich 24, mit dem er in die obere Vertiefung 15 der Konsole 15 eintaucht, einen kreiszylindrischen Querschnitt auf, zu dem der pilzförmige Befestigungszapfen 21 koaxial angeordnet ist.

Die Durchgangsbohrung 25 in der Konsole 13 ist nach oben zum Boden 29 der oberen Vertiefung 15 hin keglig angefast oder stark verrundet, was ein einwandfreies und beschädigungsfreies Einführen des pilzförmigen Befestigungszapfens 21 am Anschlagpuffer 16 bei dessen Montage an der Konsole 13 begünstigt.

Der Hals 22 des pilzförmigen Befestigungszapfens 21 am Anschlagpuffer 16 weist einen geringfügig, z. B. einige Zehntel Millimeter, kleineren Durchmesser als die Durchgangsbohrung 25 in der Konsole 13 und eine Länge auf, die dem Abstand der Böden 27, 29 der beiden Vertiefungen 15, 16 in der Konsole 23 bzw. der Dicke der dazwischen gegebenen Wand 30 entspricht bzw. um einige zehntel Millimeter größer als diese(r) ist.

Der Anschlagpuffer 16 besteht aus begrenzt elastischem Material, z. B. Hartgummi oder einem geeigneten Kunststoff.

Der Kopf 23 des pilzförmigen Befestigungszapfens 21 weist einen gegenüber jenem des Halses 22 derart größerem Durchmesser auf, dass er aufgrund der Flexibilität des Anschlagpuffer-Materials bei Montage des Anschlagpuffers 16 an der Konsole 13 beim Durchdringen der Durchgangsbohrung 25 zunächst auf deren Durchmesser zusammenpressbar ist und sich dann, nach vollständigem Durchdringen der Durchgangsbohrung 25, wieder auf seinen in Arretierungsposition gegebenen Normaldurchmesser ausdehnen kann.

Vorzugsweise verjüngt sich der Kopf 23 des pilzförmigen Befestigungszapfens 21 von seinem oberen größten Durchmesser bei 31 ausgehend keglig mit entweder gerader oder konkav gekrümmter Außenfläche 32 zu einem kleineren Durchmesser an seiner Stirnfläche 33 hin, der um ein gewisses Maß kleiner als der Durchmesser der Durchgangsbohrung 25 in der Konsole 13 ist.

Die Konsole 13 kann - wie dargestellt - im Querschnitt etwa hutförmig ausgebildet sein, wobei in deren erhöhtem Mittelbereich 34 die obere Vertiefung 15 nach oben offen und die untere Vertiefung 26 nach unten offen ausgebildet sind. Beiderseits dieses erhöhten Mittelbereiches 34 schließen sich Seitenbereiche 35, 36 einer Grundplatte 37 an, in deren Oberseite die Querrinnen 18, 19 für die Aufnahme der Haltebügel 11, 12 ausgebildet sind. Die obere Vertiefung 15 ist im dargestellten Beispiel im Durchmesser etwas größer als der in sie eintauchende untere Bereich 24 des Anschlagpuffers und auch etwas größer als die Breite des erhöhten Mittelbereiches 34, so dass die Vertiefung 15 nicht rundum geschlossen ist.

Die Verbindung von Anschlagpuffer 16 und Konsole 13 kann von Hand oder robotergesteuert erfolgen. Dabei wird der Anschlagpuffer 16 von oben her an die Konsole 13 herangeführt und dann in Axialrichtung weiter der pilzartige Befestigungszapfen 21 mit seinem Kopf 23 durch die Durchgangsbohrung 25 hindurchgepresst. Sobald der Anschlagpuffer 16 mit seiner Unterseite 28 am Boden 29 der oberen Vertiefung 15 in der Konsole 13 aufsitzt, entspannt sich der vorher in der Durchgangsbohrung 25 zusammengepresste Kopf 23 wieder auf seinen bei 31 gegebenen Normal-Durchmesser, so dass ein gewisser Randbereich um die Durchgangsbohrung 25 am Boden 27 der unteren Vertiefung 26 in der Konsole vom Kopf 23 hintergriffen wird und dadurch der Anschlagpuffer 16 fest an der Konsole 13 montiert ist.

## Patentansprüche

1. Gefederte Aufhängung einer Starrachse in einem Fahrzeug, insbesondere Lastkraftwagen oder Omnibus, wobei der Achskörper (2) der Starrachse unten an einer vorn und hinten am Fahrgestellrahmen (1) gelagerten Blattfeder (3) befestigt ist und zwar mittels zweier U-förmiger Haltebügel (11, 12), die eine oben auf der Blattfeder (3) aufliegende Konsole (13) übergreifen und diese dort mittels unten am Achskörper (2) gekonterten Muttern (14) festspannen, wobei die Konsole (13) oben eine Vertiefung (15), in der ein bei Einfederung am Rahmen bzw. einem rahmenfesten Anschlag (17) zur Anlage kommender Anschlagpuffer (16) aufgenommen ist, sowie beidseitig der Vertiefung (15) je eine Querrinne (18, 19) aufweist, in der jeweils ein Haltebügel (11, 12) lagefixiert eintaucht, **dadurch gekennzeichnet, dass** als Anschlagpuffer (16) ein solcher verwendet ist, der unten an einem Pufferkörper (20) einen pilzförmigen Befestigungszapfen (21) aufweist, dass dieser Anschlagpuffer (16) mit einem unteren Abschnitt (24) seines Pufferkörpers (20) in die obere Vertiefung (15) der Konsole (13) eintauchend aufgenommen ist, ferner mit dem Hals (22) seines pilzförmigen Befestigungszapfens (21) eine Durchgangsbohrung (25) in der Konsole (13) durchdringt und außerdem mit dem Kopf (23) seines pilzförmigen Befestigungszapfens (21) in eine unten in der Konsole (13) gegebene Vertiefung (26) eingetaucht und am Boden (27) derselben, den Randbereich um die Durchgangsbohrung (25) hintergreifend, verrastet ist.

2. Achsaufhängung nach Anspruch 1, **dadurch gekennzeichnet, dass** die Unterseite (28) des Pufferkörpers (20) am Anschlagpuffer (16) schwach kegelförmig oder konvex gewölbt und der Boden (29) der oberen Vertiefung (15) in der Konsole (13) für eine formschlüssige Anlage dieser solchermaßen gestalteten Pufferkörper-Unterseite (28) entsprechend angepasst ist.

3. Achsaufhängung nach Anspruch 1 oder 2, **dadurch gekennzeichnet, dass** die Durchgangsbohrung (25) in der Konsole (13) oben am Übergang zum Boden (29) der oberen Vertiefung (15) keglig angefast oder stark verrundet ist.

4. Achsaufhängung nach einem der vorhergehenden Ansprüche, **dadurch gekennzeichnet, dass** der Hals (22) des Befestigungszapfens (21) am Anschlagpuffer (16) einen geringfügig, z. B. einige Zehntel Millimeter, kleineren Durchmesser als die Durchgangsbohrung (25) in der Konsole (13) und eine Länge aufweist, die dem Abstand der Böden (27, 29) der beiden Vertiefungen (15, 26) bzw. der Dicke der dazwischen gegebenen Wand (30) entspricht oder demgegenüber um einige Zehntel Millimeter größer ist.

5. Achsaufhängung nach einem der vorhergehenden Ansprüche, **dadurch gekennzeichnet, dass** der Kopf (23) des pilzförmigen Befestigungszapfens (21) am Anschlagpuffer (16) einen gegenüber jenem des Halses (22) derart größeren Durchmesser aufweist, dass er aufgrund der Flexibilität des Anschlagpuffer-Materials bei Montage des Anschlagpuffers (16) an der Konsole (13) beim Durchdringen der Durchgangsbohrung (25) auf deren Durchmesser zusammenpressbar ist und sich nach vollständigem Durchdringen der Durchgangsbohrung (25) wieder auf seinen in Arretierungsposition gegebenen Normal-Durchmesser ausdehnen kann.

6. Achsaufhängung nach einem der vorhergehenden Ansprüche, **dadurch gekennzeichnet, dass** der Kopf (23) des pilzförmigen Befestigungszapfens (21) am Anschlagpuffer (16) sich von seinem oberen größten Durchmesser (31) ausgehend keglig mit gerader oder konkav gekrümmter Außenfläche (32) zu einem kleineren Durchmesser an seiner Stirnfläche (33) hin verjüngt, der wiederum ein gewisses Maß kleiner ist als der Durchmesser der Durchgangsbohrung (25) in der Konsole (13).

7. Achsaufhängung nach einem der vorhergehenden Ansprüche, **dadurch gekennzeichnet, dass** die Konsole (13) im Querschnitt eine Hutform aufweist, in deren erhöhtem Mittelbereich (34) die obere Vertiefung (15) nach oben offen und die untere Vertiefung (26) nach unten offen ausgebildet sind, und dass beiderseits dieses erhöhten Mittelbereiches (34) sich Seitenbereiche (35, 36) einer Grundplatte (37) anschließen, in deren Oberseiten die Querrinnen (18, 19) für die Aufnahme der Haltebügel (11, 12) ausgebildet sind.

8. Achsaufhängung nach einem der vorhergehenden Ansprüche, **dadurch gekennzeichnet, dass** der Pufferkörper (20) des Anschlagpuffers (16) zumindest in jenem unteren Bereich (24), mit dem er in die obere Vertiefung (15) in der Konsole (13) eintaucht, einen kreiszylindrischen Querschnitt aufweist, zu dem der pilzförmige Befestigungszapfen (21) koaxial angeordnet ist.

## Claims

1. Sprung suspension for a rigid axle in a vehicle, in particular a truck or bus, whereby the lower side of the axle body (2) of the rigid axle is fastened to a leaf spring (3) supported at the front and rear on the chassis frame (1), the fastening of which lower side of the axle body (2) being effected by means of two U-shaped retaining bolts (11, 12) which extend beyond a console (13) contacting the top side of the leaf spring (3) and clamp it into place there by means of nuts (14) secured at the lower side of the axle body (2), whereby the top side of the console (13) features a recess (15) in which is inserted a stop buffer (16) contacting the frame or a frame-mounted stop (17) during spring compression and a transverse channel (18, 19) on each side of said recess (15), whereby one rigidly mounted retaining bolt (11, 12) lies and is fixed in each transverse channel (18, 19), **characterised in that** the stop buffer (16) is designed such that it has a mushroom-type fastening pin (21) at the lower side of a buffer body (20), that said stop buffer (16) is supported with a lower section (24) of its buffer body (20) dipping into the upper recess (15) in the console (13), penetrates a passage bore (25) in the console (13) with the neck (22) of its mushroom-type fastening pin (21) and, furthermore, dips into a recess (26) in the lower side of the console (13) with the head (23) of its mushroom-type fastening pin (21) and is locked into place at the bottom (27) of said recess (26) by expanding beyond the rim area around the lower end of the passage bore (25).

2. Axle suspension according to Claim 1, **characterised in that** the underside (28) of the buffer body (20) of the stop buffer (16) is of slightly conical or convex design and the bottom (29) of the upper recess (15) in the console (13) is correspondingly adapted for positive contact with the buffer-body underside (28) thus designed.

3. Axle suspension according to Claim 1 or 2, **characterised in that** the upper end of the passage bore (25) in the console (13) is chamfered in a conical manner or is heavily rounded at the transition to the bottom (29) of the upper recess (15).

4. Axle suspension according to one of the foregoing Claims, **characterised in that** the neck (22) of the fastening pin (21) on the stop buffer (16) has a diameter which is slightly, eg some tenths of a millimetre, smaller than the passage bore (25) in the console (13) and has a length which corresponds to the distance between the bottoms (27, 29) of the two recesses (15, 26) or to the thickness of the wall (30) provided between them or is some tenths of a millimetre larger than said wall (30) is thick.

5. Axle suspension according to one of the foregoing Claims, **characterised in that** the head (23) of the mushroom-type fastening pin (21) on the stop buffer (16) has a diameter which is so much larger than that of the neck (22) that owing to the flexibility of the stop-buffer material it can be compressed to the diameter of the passage bore (25) when it passes through the passage bore (25) during the assembly of the stop buffer (16) on the console (13) and after complete passage through said passage bore (25) again expands to its normal diameter which it has in locking position.

6. Axle suspension according to one of the foregoing Claims, **characterised in that** the head (23) of the mushroom-type fastening pin (21) on the stop buffer (16) tapers from its upper largest diameter (31) with a straight or concave surface (32) to a smaller diameter at its end face (33), which diameter is in turn by a certain dimension smaller than the diameter of the passage bore (25) in the console (13).

7. Axle suspension according to one of the foregoing Claims, **characterised in that** the cross-section of the console (13) has the shape of a hat in whose raised centre area (34) the upper recess (15) opens upwards and the lower recess (26) opens downwards and that side areas (35, 36) of a base plate (37) are provided on both sides of this raised centre area (34), in the top sides of which side areas (35, 36) the transverse channels (18, 19) are provided for the holding of the retaining bolts (11, 12).

8. Axle suspension according to one of the foregoing Claims, **characterised in that** the buffer body (20) of the stop buffer (16) features a circular cylindrical cross-section at least **in that** lower area (24) with which it dips into the upper recess (15) in the console (13), whereby the mushroom-type fastening pin (21) is arranged coaxially with said circular cylindrical cross-section.

## Revendications

1. Suspension amortie d'un essieu rigide, en particulier d'un camion ou d'un bus, auquel cas le corps d'essieu (2) de l'essieu rigide est fixé en dessous sur un ressort à lame (3) suspendu à l'avant et à l'arrière sur le cadre du véhicule (1) et plus exactement par le biais de deux étriers de fixation en forme de U (11, 12) qui chevauchent une console (13) s'appuyant sur le dessous sur le ressort à lame (3) et bloquent celle-ci à cet endroit à l'aide d'écrous bloqués par contre-écrous en dessous sur le corps d'essieu (2), auquel cas la console (13) présente sur le dessus un évidement (15) dans lequel est logé un tampon de butée en appui pour le débattement sur le cadre ou sur une butée (17) fixée sur le cadre, ainsi que, de chaque côté de l'évidement (15), une rainure transversale (18, 19) dans laquelle est enfoncé à chaque fois un étrier de fixation (11, 12) de manière fixe, **caractérisée en ce qu'**est utilisé un tampon de butée (16) présentant en dessous un pivot de fixation en forme de champignon (21) sur un corps de tampon (20), **en ce que** ce tampon de butée (16) est logé par enfoncement dans l'évidement supérieur (15) de la console (13) avec une partie inférieure (24) de son corps de tampon (20), en outre traverse un alésage de passage (25) réalisé dans la console (13) avec la gorge (22) de son pivot de fixation en forme de champignon (21) et en plus est enfoncé dans un évidement (26) réalisé en dessous dans la console (13) avec la tête (23) de son pivot de fixation en forme de champignon (21) et est encranté sur le fond du même évidement, en prise par derrière avec la bordure autour de l'alésage de passage (25).

2. Suspension d'essieu selon la revendication 1, **caractérisée en ce que** la face inférieure (28) du corps de tampon (20) sur le tampon de butée (16) est légèrement en forme de cône ou convexe et la base (29) de l'évidement supérieur (15) réalisé dans la console est adaptée en conséquence pour un montage par adhérence de cette face inférieure (28) du corps de tampon réalisé ainsi.

3. Suspension d'essieu selon la revendication 1 ou 2, **caractérisée en ce que** l'alésage de passage (25) réalisé dans la console (13) est chanfreiné en forme de cône ou fortement arrondi sur le dessus au niveau du passage vers la base (29) de l'évidement supérieur (15).

4. Suspension d'essieu selon l'une des revendications mentionnées précédemment, **caractérisée en ce que** la gorge (22) du pivot de fixation (21) présente un diamètre légèrement plus petit, par exemple de quelques dixièmes de millimètres, que l'alésage de passage (25) réalisé dans la console (13) au niveau du tampon de butée (16) et une longueur qui correspond à l'écart des bases (27, 29) des deux évidements (15, 26) ou de l'épaisseur de la paroi existante entre les deux, ou est supérieur de quelques dixièmes de millimètres par rapport à celle-ci.

5. Suspension d'essieu selon l'une des revendications mentionnées précédemment, **caractérisée en ce que** la tête (23) du pivot de fixation en forme de champignon (21) sur le tampon de butée (16) présente un diamètre plus important que celui de la gorge (22) de telle manière qu'en raison de la souplesse du matériau du tampon de butée, elle puisse être enfoncée sur le diamètre de l'alésage de passage lors du montage du tampon de butée (16) sur la console (13) lors de la pénétration dans l'alésage de passage (25) et puisse s'étendre de nouveau sur son diamètre normal en position de blocage après une pénétration complète dans l'alésage de passage (25).

6. Suspension d'essieu selon l'une des revendications mentionnées précédemment, **caractérisée en ce que** la tête (23) du pivot de fixation en forme de champignon (21) sur le tampon de butée (16) se rétrécit à partir de son diamètre supérieur plus important (31) sous forme de cône avec une surface extérieure (32) droite ou concave par rapport à un diamètre plus petit sur sa surface avant (33), lequel est de nouveau inférieur d'une certaine cote par rapport au diamètre de l'alésage de passage (25) réalisé dans la console (13).

7. Suspension d'essieu selon l'une des revendications mentionnées précédemment, **caractérisée en ce que** la console (13) présente en section transversale une forme de chapeau dans la partie centrale relevée (34) de laquelle sont formées l'évidement supérieur (15) de manière ouverte vers le haut et l'évidement inférieur (26) vers le bas, et **en ce que** de chaque côté de cette partie centrale relevée (34), des parties latérales (35, 36) d'une plaque de base (37) se relient entre elles, les côtés supérieurs de cette plaque présentant les rainures transversales (18, 19) pour loger l'étrier de fixation (11, 12).

8. Suspension d'essieu selon l'une des revendications mentionnées précédemment, **caractérisée en ce que** le corps de tampon (20) du tampon de butée (16) présente une section transversale circulaire au moins dans chaque partie inférieure (24) avec lequel il est enfoncé dans l'évidement supérieur (15) réalisé dans la console et le pivot de fixation en forme de champignon (21) est disposé de manière coaxiale par rapport la section transversale.
